# EUROPEAN PATENT APPLICATION

(11) **EP 4 353 347 A1**
(43) Date of publication of application: **17.04.2024**
(21) Application number: 22809309.2
(22) Date of filing: 26.05.2022
(51) Int. Cl.: B01D 61/02, B01D 69/12, B01D 71/82

(54) **REVERSE OSMOSIS COMPOSITE MEMBRANE**

(30) Priority: 26.05.2021 JP 2021088569
(71) Applicant: Nagase & Co., Ltd., Osaka 550-8668 (JP); National University Corporation Nara Institute of Science and Technology, Ikoma-shi, Nara 630-0192 (JP); National University Corporation Kobe University, Kobe-shi, Hyogo 657-8501 (JP)
(72) Inventor: TANI, Hiroshi, Nagoya-shi, Aichi 460-8560 (JP); YAMAMOTO, Yoshimi, Nagoya-shi, Aichi 460-8560 (JP); YASUHARA, Kazuma, Ikoma-shi, Nara 630-0192 (JP); INOIE, Tomomi, Ikoma-shi, Nara 630-0192 (JP); ISHIHARA, Mika, Ikoma-shi, Nara 630-0192 (JP); KISHIMOTO, Naoko, Ikoma-shi, Nara 630-0192 (JP); YOSHIOKA, Tomohisa, Kobe-shi, Hyogo 657-8501 (JP); NAKAGAWA, Keizo, Kobe-shi, Hyogo 657-8501 (JP); SHINTANI, Takuji, Kobe-shi, Hyogo 657-8501 (JP)
(74) Representative: Vidon Brevets & Stratégie
(86) International application number: PCT/JP2022/021572
(87) International publication number: WO 2022/250116

(57) **Abstract**

An object is to realize a novel reverse osmosis membrane (more specifically, reverse osmosis composite membrane) that is capable of suppressing biofouling. The object is attained with use of a reverse osmosis composite membrane which is obtained by chemically modifying a surface thereof with a compound that has an amino group and that is obtained by modifying the amino group with two molecules of α-picolyl group and has a dipicolylamine structure.

## Description

### Technical Field

The present invention relates to a reverse osmosis composite membrane.

### Background Art

Antibiotics are powerful tools against bacterial infectious diseases. Conventionally, various antibiotics that target proteins synthesized by bacteria have been developed. However, bacteria that acquire drug resistance to conventional antibiotics by methods such as altering the structures of proteins that are targets of the antibiotics have been reported. Therefore, the conventional antibiotics that target proteins have not been sufficient to deal with infectious diseases.

For this reason, in recent years, there has been a demand for development of antibiotics that target substances other than proteins. The inventors of the present invention have previously developed polymers that target the cell membranes of bacteria and that have antimicrobial activity (for example, Patent Literature 1).

By the way, reverse osmosis (RO) membranes are widely used in the field of producing fresh water from sea water, the field of purifying water, and the like. In a case where a reverse osmosis membrane is used for a long period of time, microbes adhere to a surface of the reverse osmosis membrane and proliferate. This causes formation of a biofilm on the surface of the reverse osmosis membrane. As a result, a problem referred to as biofouling, which causes a deterioration of the water permeability of the reverse osmosis membrane, occurs. Currently, development of techniques for preventing biofouling are ongoing.

For example, Patent Literature 2 discloses a water treatment method of obtaining treated water by separating, with use of a reverse osmosis membrane that is disposed upstream of a treatment step and a reverse osmosis membrane that is disposed downstream of the treatment step, water that is to be treated and that contains a chlorine-based oxidant and a slime control agent. In this water treatment method, biofouling in the reverse osmosis membrane that is disposed upstream of the treatment step is suppressed mainly with use of the chlorine-based oxidant that has a fast reaction rate, and biofouling in the reverse osmosis membrane that is disposed downstream of the treatment step is suppressed mainly with use of the slime control agent that has a slow reaction rate.

### Citation List

### [Patent Literature]

[Patent Literature 1]
   WO2019/230543 A1
[Patent Literature 2]
   Japanese Patent Application Publication Tokukai No. 2020-39993

### Summary of Invention

### Technical Problem

However, reverse osmosis membranes used in conventional techniques as described above are not sufficiently capable of suppressing biofouling. Therefore, there is a demand for development of a novel reverse osmosis membrane that is capable of suppressing biofouling.

An object of an aspect of the present invention is to realize a novel reverse osmosis membrane (more specifically, reverse osmosis composite membrane) that is capable of suppressing biofouling.

### Solution to Problem

That is, a reverse osmosis composite membrane in accordance with an embodiment of the present invention is obtained by chemically modifying a surface thereof with a compound that has an amino group and that is obtained by modifying the amino group with two molecules of α-picolyl group and has a dipicolylamine structure represented by the following formula (1): 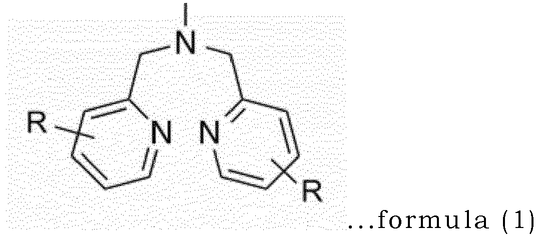 (in the formula (1), each R is independently selected from the group consisting of a hydrogen atom, halogen atoms, a nitro group, a cyano group, an amino group, alkyl groups having 1 to 6 carbon atoms, and alkoxy groups having 1 to 6 carbon atoms and may be identical or different, and the dipicolylamine structure may form a complex with a metal M).

### Advantageous Effects of Invention

According to an aspect of the present invention, it is possible to realize a novel reverse osmosis membrane (more specifically, reverse osmosis composite membrane) that is capable of suppressing biofouling.

### Brief Description of Drawings

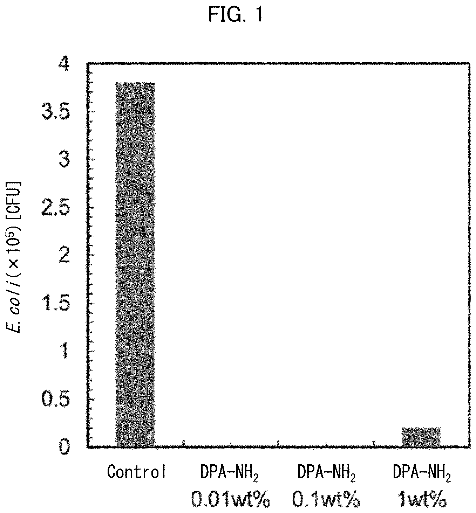

Fig. 1 is a graph showing results of evaluating the antibacterial activity of reverse osmosis composite membranes in accordance with an embodiment of the present invention (reverse osmosis composite membranes to each of which a compound in a monomeric form was bound).

### Description of Embodiments

Embodiments of the present invention are described as below. However, the present invention is not limited to the embodiments. The present invention is not limited to any configurations described below, and can be altered variously within the scope of the claims. The present invention also encompasses, in its technical scope, any embodiment and example derived by combining, as appropriate, technical means disclosed in differing embodiments and examples. All documents cited in the present specification are incorporated herein by reference. Any numerical range expressed as "A to B" herein means "not less than A (A or more) and not more than B (B or less)".

A reverse osmosis composite membrane in accordance with an embodiment of the present invention is a reverse osmosis composite membrane which is obtained by chemically modifying a surface thereof (a surface of the reverse osmosis composite membrane) with a compound that has an amino group and that is obtained by modifying the amino group with two molecules of α-picolyl group and has a dipicolylamine structure represented by formula (1). The reverse osmosis composite membrane in accordance with an embodiment of the present invention may be a reverse osmosis composite membrane which has, on a surface thereof (a surface of the reverse osmosis composite membrane), a compound that has an amino group and that is obtained by modifying the amino group with two molecules of α-picolyl group and has a dipicolylamine structure represented by formula (1). Note that the compound having the amino group may be the compound in a polymeric form or may be the compound in a monomeric form.

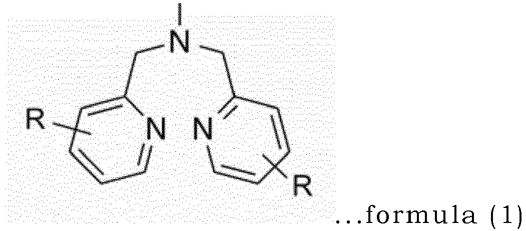

In the formula (1), each R is independently selected from the group consisting of a hydrogen atom, halogen atoms, a nitro group, a cyano group, an amino group, alkyl groups having 1 to 6 carbon atoms, and alkoxy groups having 1 to 6 carbon atoms and may be identical or different.

The halogen atoms each of which can be each R in the formula (1) are not particularly limited. Examples of the halogen atoms include a fluorine atom, a chlorine atom, a bromine atom, and an iodine atom.

The alkyl groups having 1 to 6 carbon atoms each of which alkyl groups can be each R in the formula (1) are not particularly limited. Examples of the alkyl groups having 1 to 6 carbon atoms include a methyl group, an ethyl group, an n-propyl group, an isopropyl group, an n-butyl group, an isobutyl group, a tert-butyl group, a sec-butyl group, an n-pentyl group, a neopentyl group, an n-hexyl group, an isohexyl group, and a 3-methylpentyl group.

The alkoxy groups having 1 to 6 carbon atoms each of which alkoxy groups can be each R in the formula (1) are not particularly limited. Examples of the alkoxy groups having 1 to 6 carbon atoms include a methoxy group, an ethoxy group, an n-propoxy group, an isopropoxy group, an n-butoxy group, an isobutoxy group, a tert-butoxy group, a sec-butoxy group, an n-pentoxy group, a neopentoxy group, an n-hexyloxy group, an isohexyloxy group, and a 3-methylpentoxy group.

In the formula (1), each R is preferably independently one or more selected from the group consisting of a hydrogen atom and a methyl group, and is more preferably a hydrogen atom. This configuration has an advantage that there is less steric hindrance when a metal M coordinates and an affinity between the compound and bacteria is improved.

The dipicolylamine structure represented by the formula (1) may form a complex with the metal M or may not form the complex with the metal M. Examples of the metal M include divalent metals, and more specific examples of the metal M include Zn, Cu, Mg, Ca, Ni, Fe, Co, and Mn. The metal M is more preferably Zn, among these metals. Zn can abundantly exist in the living body of a living organism. Therefore, in a case where the metal M is Zn, it is possible to suppress the toxicity of the compound to a living organism that is not a target of inhibition of growth.

In a case where the compound having the amino group is the compound in the polymeric form, the dipicolylamine structure represented by the formula (1) preferably forms the complex with the metal M. This configuration makes it possible to further increase the antibacterial activity of the compound in the polymeric form. In a case where the compound having the amino group is the compound in the polymeric form and in a case where the dipicolylamine structure forms the complex with the metal M, the positive charge of the compound increases, and selective recognition of a microbe by the compound and/or selective binding of the compound to a microbe can increase. Therefore, it is considered that the antimicrobial activity of the compound further increases.

Meanwhile, in a case where the compound having the amino group is the compound in the monomeric form, the dipicolylamine structure represented by the formula (1) preferably does not form the complex with the metal M. Even in a case where the dipicolylamine structure does not form the complex with the metal M, the compound in the monomeric form has high antibacterial activity. Therefore, this configuration does not require the metal M when the reverse osmosis composite membrane is produced or reproduced and/or reused, and is industrially advantageous (for example, the reverse osmosis composite membrane is produced inexpensively and easily, there is no need to coordinate the metal M again when the reverse osmosis composite membrane is reused. etc.).

The compound is preferably represented by the following formula (2) (for example, the compound in the polymeric form).

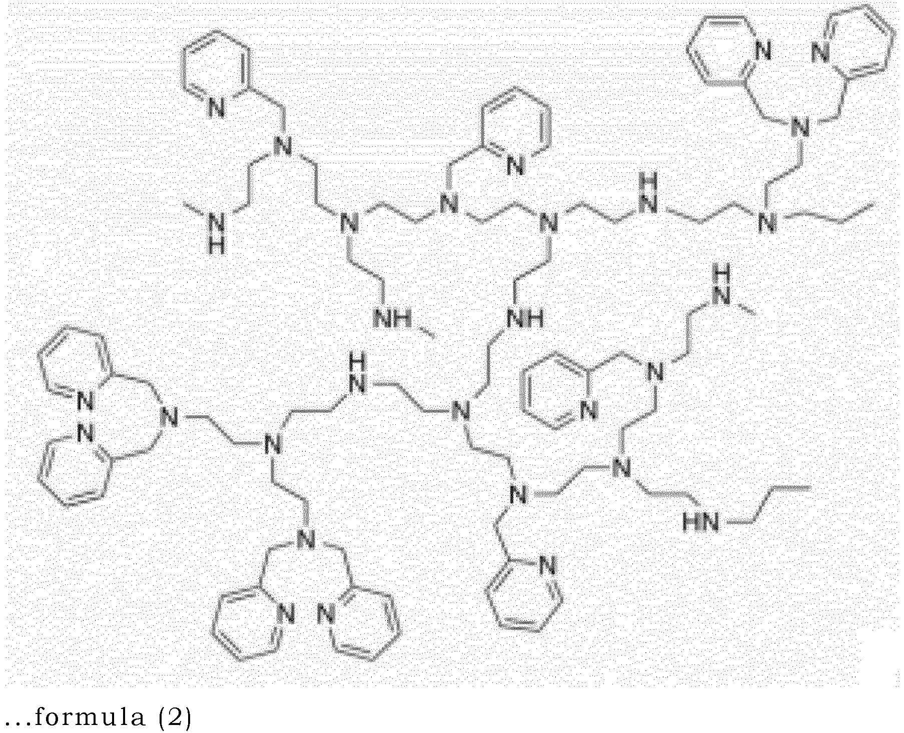

The compound is preferably represented by the following formula (3) (for example, the compound in the monomeric form). 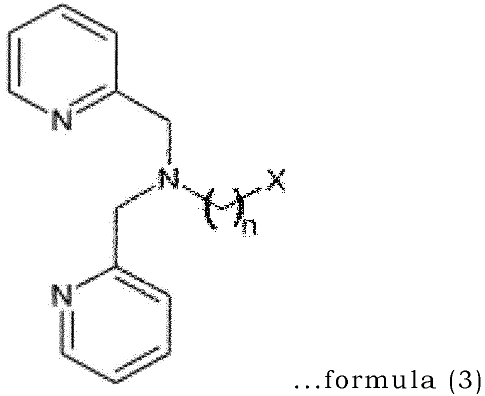 In the formula (3), n is an integer of 1 or more, and X is a functional group which binds to a carboxyl group. Preferable examples of the functional group which binds to a carboxyl group include an amino group and a hydroxyl group, because each of these functional groups can easily binds to a carboxyl group. Further, X is more preferably an amino group, because an amino group is capable of forming an amide bond which does not hydrolyze, that is, an amino group has excellent binding stability with a carboxyl group. Examples of n include integers of 1 to 20, integers of 1 to 15, integers of 1 to 10, integers of 1 to 5, and integers of 1 to 3. The above configuration makes it possible to easily chemically modify the surface of the reverse osmosis composite membrane with the compound.

Moreover, in a case where the reverse osmosis composite membrane is chemically modified with the compound represented by the formula (3) (for example, the compound in the monomeric form), a deterioration of water permeability (for example, a flow rate) can be suppressed, as compared with a case where the reverse osmosis composite membrane is chemically modified with the compound in the polymeric form, as indicated in the examples described later. Therefore, the compound represented by the formula (3) makes it possible to further improve the performance of the reverse osmosis composite membrane.

The compound is preferably (i) the compound represented by the formula (2), (ii) the compound represented by the formula (3), or (iii) a mixture of (iii-a) the compound represented by the formula (2) and (iii-b) the compound represented by the formula (3).

The compound is preferably (i) the compound represented by the formula (2), (ii) the compound which is represented by the formula (3) and in which the dipicolylamine structure does not form the complex with the metal M, or (iii) a mixture of (iii-a) the compound represented by the formula (2) and (iii-b) the compound which is represented by the formula (3) and in which the dipicolylamine structure does not form the complex with the metal M.

The compound is preferably (i) the compound which is represented by the formula (2) and in which the dipicolylamine structure forms the complex with the metal M, (ii) the compound represented by the formula (3), or (iii) a mixture of (iii-a) the compound which is represented by the formula (2) and in which the dipicolylamine structure forms the complex with the metal M and (iii-b) the compound represented by the formula (3).

The compound is preferably (i) the compound which is represented by the formula (2) and in which the dipicolylamine structure forms the complex with the metal M, (ii) the compound which is represented by the formula (3) and in which the dipicolylamine structure does not form the complex with the metal M, or (iii) a mixture of (iii-a) the compound which is represented by the formula (2) and in which the dipicolylamine structure forms the complex with the metal M and (iii-b) the compound which is represented by the formula (3) and in which the dipicolylamine structure does not form the complex with the metal M.

The molecular weight of the compound, for example, one or more molecular weights selected from the group consisting of a number average molecular weight, a weight average molecular weight, and a year average molecular weight, is not particularly limited, and can be set as appropriate. For example, the molecular weight is preferably 200 to 100,000, more preferably 300 to 10,000, even more preferably 500 to 5,000, and particularly preferably 750 to 3,000. For example, in a case where the compound is one that is obtained with use of, as a raw material polymer, polyethyleneimine (the compound in the polymeric form), the molecular weight of the compound is preferably the number average molecular weight. In a case where the compound is one that is obtained with use of, as a raw material polymer, polyallylamine (the compound in the polymeric form), the molecular weight of the compound is preferably the weight-average molecular weight. The number average molecular weight may be a number average molecular weight calculated by a viscosity method, or may be a number average molecular weight calculated based on boiling point elevation.

As the compound with which the reverse osmosis composite membrane is chemically modified, it is possible to use one that is produced by synthesis or to use a commercially available compound. A method of synthesizing the compound is not limited, and it is possible to use a known synthesis method. As an example, it is possible to use a synthesis method disclosed in WO2019/230543 A1 or European Journal of Medicinal Chemistry, 174, 181-197; 2019. Note that WO2019/230543 A1 is incorporated herein by reference.

A material which constitutes the reverse osmosis composite membrane before chemical modification is not limited, and example of the material include aromatic polyamides and polysulfones. The reverse osmosis composite membrane in accordance with an embodiment of the present invention can be, for example, the reverse osmosis composite membrane which is obtained by chemically modifying a surface of an aromatic polyamide or the reverse osmosis composite membrane which is obtained by chemically modifying a surface of a polysulfone.

A method of chemically modifying the surface of the reverse osmosis composite membrane with the compound having the dipicolylamine structure represented by the formula (1) and a method of providing, on the surface of the reverse osmosis composite membrane, the compound having the dipicolylamine structure represented by the formula (1) are each not limited, and a method in which a known chemical reaction is used may be used, as appropriate. Note that the compound having the dipicolylamine structure represented by the formula (1) may be directly bound to the surface of the reverse osmosis composite membrane, or may be indirectly bound to the surface of the reverse osmosis composite membrane via another configuration (for example, a linker, an activator, a polyamide layer containing glutamic acid, etc.).

Examples of the method include a method in which a chemical bond is formed by reacting (i) the amino group or the hydroxyl group which is possessed by the compound having the dipicolylamine structure represented by the formula (1) and (ii) a carboxyl group which is possessed by the reverse osmosis composite membrane.

More specific examples of the method include a carbodiimide induction method in which (a) the carboxyl group which is possessed by the reverse osmosis composite membrane is reacted with the amino group (for example, a primary amine) which is possessed by the compound having the dipicolylamine structure represented by the formula (1). In particular, a preferable example is such that a polyamide layer containing glutamic acid is prepared on the surface of the reverse osmosis composite membrane and a condensation reaction is caused with use of a water-soluble carbodiimide compound (for example, 1-ethyl-3-(3-dimethylaminopropyl)carbodiimide hydrochloride (EDC=HCl) etc.) which is a condensing agent and an active esterifying agent (for example, N-hydroxysuccinimide (NHS) etc.).

More specifically, by immersing the reverse osmosis composite membrane in an aqueous solution containing the compound, it is possible to chemically modify the surface of the reverse osmosis composite membrane with the compound. In other words, the reverse osmosis composite membrane in accordance with an embodiment of the present invention is said to be the reverse osmosis composite membrane which is obtained by immersing a reverse osmosis membrane in an aqueous solution containing the compound in accordance with an embodiment of the present invention.

The reverse osmosis composite membrane which is immersed in the aqueous solution containing the compound may be, for example, the reverse osmosis composite membrane in which the surface thereof is not chemically modified with the compound or may be the reverse osmosis composite membrane in which the surface thereof has already been chemically modified with the compound.

The time for which the reverse osmosis composite membrane is immersed in the aqueous solution containing the compound is not particularly limited.

The concentration of the compound in the aqueous solution containing the compound is not particularly limited. For example, in 100% by weight of the aqueous solution, the concentration is preferably 0.01% by weight to 5% by weight, more preferably 0.01% by weight to 3% by weight, and even more preferably 0.01% by weight to 1% by weight. The concentration may be not more than 0.1% by weight in 100% by weight of the aqueous solution. In a case where the concentration falls within the above-described range, it is possible to sufficiently and efficiently chemically modify the surface of the reverse osmosis composite membrane with the compound. In a case where the concentration is not more than 1% by weight in 100% by weight of the aqueous solution, such a concentration does not adversely affect the properties of the membrane and is more preferable. The "% by weight" may be referred to as "wt%" herein.

An ambient temperature when the reverse osmosis composite membrane is immersed in the aqueous solution containing the compound is not particularly limited, and may be, for example, 0°C to 35°C.

Before the reverse osmosis composite membrane is immersed in the aqueous solution containing the compound, the reverse osmosis composite membrane may be left to stand still in pure water, for example, for 30 minutes.

In a case where the above carbodiimide induction method is employed, the reverse osmosis composite membrane may be immersed in each of an aqueous solution containing the water-soluble carbodiimide compound and an aqueous solution containing the active esterifying agent, before the reverse osmosis composite membrane is immersed in the aqueous solution containing the compound.

First, SWC4 (Nitto Denko Corporation), which was a commercially available reverse osmosis composite membrane, was left to stand still in pure water for 30 minutes.

The reverse osmosis composite membrane was then immersed in 2-morpholinoethanesulfonic acid (MES), which was a buffer solution and which contained 1-ethyl-3-(3-dimethylaminopropyl)carbodiimide hydrochloride (EDC=HCl) that was a condensing agent, for 10 minutes.

The reverse osmosis composite membrane was then immersed in 2-morpholinoethanesulfonic acid (MES), which was a buffer solution and which contained N-hydroxysuccinimide (NHS) that was a stabilizer, for 15 minutes.

The reverse osmosis composite membrane was then immersed in an aqueous solution containing the compound in the polymeric form or the monomeric form of one of various concentrations (0 wt%, 1 wt%, 3 wt%, or 5 wt%), and the reverse osmosis composite membrane was reacted with the compound under conditions of 12 hours, a sealed state, a room temperature, and a dark place.

Finally, after the reverse osmosis composite membrane to which the compound bound was washed with pure water, the reverse osmosis composite membrane was stored in pure water until the reverse osmosis composite membrane was used for a test.

An embodiment of the present invention may have a configuration as below.
<1> A reverse osmosis composite membrane which is obtained by chemically modifying a surface thereof with a compound that has an amino group and that is obtained by modifying the amino group with two molecules of α-picolyl group and has a dipicolylamine structure represented by the following formula (1): 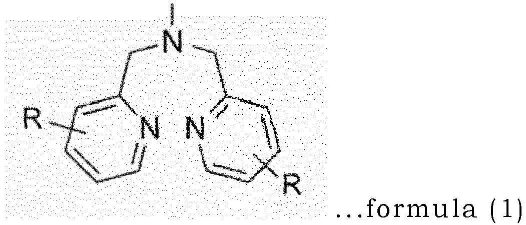 (in the formula (1), each R is independently selected from the group consisting of a hydrogen atom, halogen atoms, a nitro group, a cyano group, an amino group, alkyl groups having 1 to 6 carbon atoms, and alkoxy groups having 1 to 6 carbon atoms and may be identical or different, and the dipicolylamine structure may form a complex with a metal M).
<2> The reverse osmosis composite membrane as described in <1>, wherein the compound is represented by the following formula (2): 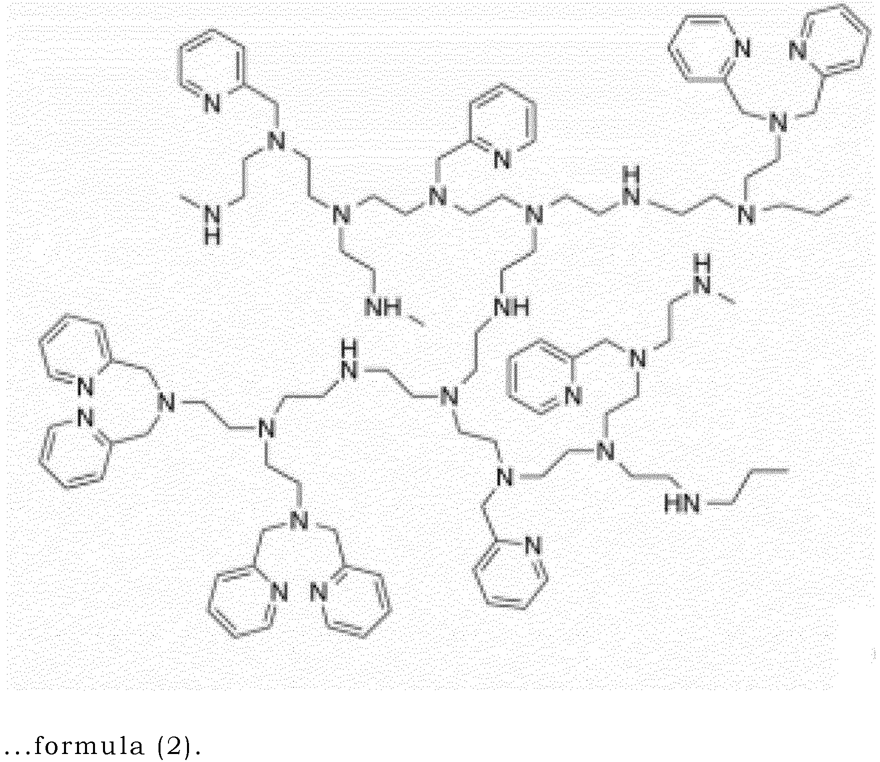
<3> The reverse osmosis composite membrane as described in <1>, wherein the compound is represented by the following formula (3): 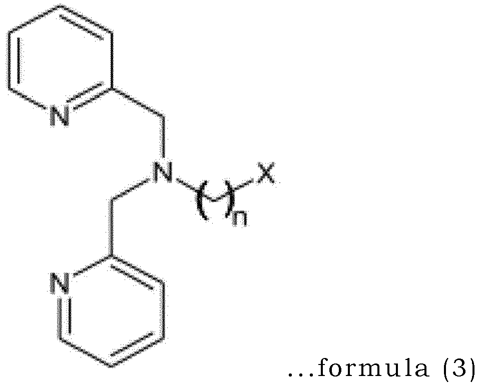 (in the formula (3), n is an integer of 1 or more, and X is a functional group which binds to a carboxyl group).
<4> The reverse osmosis composite membrane as described in any one of <1> through <3>, wherein the dipicolylamine structure forms the complex with the metal M.
<5> The reverse osmosis composite membrane as described in any one of <1> through <3>, wherein the dipicolylamine structure does not form the complex with the metal M.

### Examples

An embodiment of the present invention is described below in detail with reference to examples. However, the present invention is not limited to the examples.

### (1. Production of reverse osmosis composite membranes each chemically modified with compound in polymeric form or monomeric form)

Chemically modified reverse osmosis composite membranes were produced with use of each of a compound in a polymeric form shown below (the compound represented by the formula (2)) and the compound in a monomeric form shown below (the compound represented by the formula (3)). Note that, with regard to the compound represented by the formula (3), the compound in which n was 2 and X was an amino group was used in the present examples. 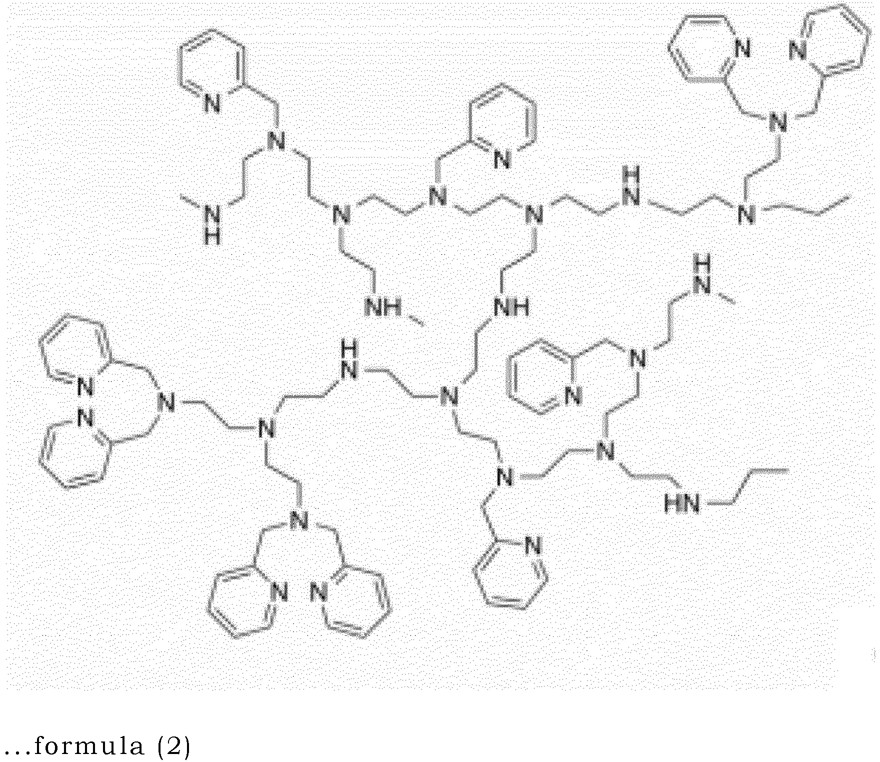 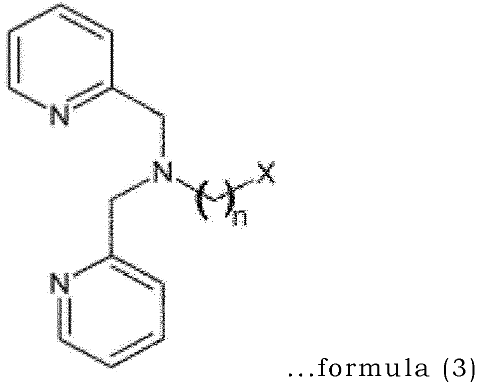 The compound in the polymeric form was synthesized in accordance with the method disclosed in WO2019/230543 A1.

The compound in the monomeric form was synthesized in accordance with the method disclosed in European Journal of Medicinal Chemistry, 174, 181-197; 2019.

First, SWC4 (Nitto Denko Corporation), which was a commercially available reverse osmosis composite membrane, was left to stand still in pure water for 30 minutes.

The reverse osmosis composite membrane was then immersed in 2-morpholinoethanesulfonic acid (MES), which was a buffer solution and which contained 1-ethyl-3-(3-dimethylaminopropyl)carbodiimide hydrochloride (EDC=HCl) that was a condensing agent, for 10 minutes.

The reverse osmosis composite membrane was then immersed in 2-morpholinoethanesulfonic acid (MES), which was a buffer solution and which contained N-hydroxysuccinimide (NHS) that was an active esterifying agent, for 15 minutes.

The reverse osmosis composite membrane was then immersed in an aqueous solution containing the compound in the polymeric form or the monomeric form of one of various concentrations (0 wt%, 1 wt%, 3 wt%, or 5 wt%), and the reverse osmosis composite membrane was reacted with the compound under conditions of 12 hours, a sealed state, a room temperature, and a dark place.

Finally, after the reverse osmosis composite membrane to which the compound bound was washed with pure water, the reverse osmosis composite membrane was stored in pure water until the reverse osmosis composite membrane was used for a test.

### (2. Evaluation of flux, inhibition rate, and ζ potential of each of reverse osmosis composite membranes)

As reverse osmosis composite membranes, used were (1) the reverse osmosis composite membranes to each of which the compound in the polymeric form of one of various concentrations (1 wt%, 3 wt%, or 5 wt%) was bound, (2) the reverse osmosis composite membrane to which the compound in the monomeric form of a specific concentration (1 wt%) was bound, and (3) the reverse osmosis composite membrane to which the compound was not bound (Control).

With use of each of the reverse osmosis composite membranes each having an area of 8.041×10⁴ cm², a flow rate (a flow rate of pure water passing through each of the reverse osmosis composite membranes) and an inhibition rate (a desalination rate) were measured under conditions of a pressure of 10 bar, a flow rate of 9.9 ml/min, and a salt concentration (NaCl) of 2000 ppm.

Further, with use of each of the reverse osmosis composite membranes each having an area of 8.041×10⁴ cm² and SurPASS 3 (manufactured by Anton Paar), the ζ potential of each of the reverse osmosis composite membranes was measured under conditions of a solution which had a pH changed with use of 0.05 M HCl and 0.1 M KOH and a supporting electrolyte which was 1 mM KCl.

Test results are shown below.

As is clear from Table 1 below (see, especially, the test results of the polymeric form), as the amount of the compound which bound to each of the reverse osmosis composite membranes increased, the inhibition rate (desalination rate) of each of the reverse osmosis composite membranes improved. This indicates that, in the phase of, for example, producing fresh water from sea water, as the amount of the compound which binds to the reverse osmosis composite membrane increases, the desalination rate of the fresh water produced from the sea water increases, that is, the ability of the reverse osmosis composite membrane improves.

As is clear from Table 1 below (see, especially, the test results of the polymeric form), each of the reverse osmosis composite membranes exhibited a practicable and sufficient flow rate although, as the amount of the compound which bound to each of the reverse osmosis composite membranes increased, the flow rate tended to decrease. This indicates that, in the phase of, for example, producing fresh water from sea water, the ability of the reverse osmosis composite membrane to produce the fresh water from the sea water is a sufficiently practicable ability although, as the amount of the compound which binds to the reverse osmosis composite membrane increases, the amount of the fresh water produced from the sea water per unit time decreases, that is, the ability of the reverse osmosis composite membrane decreases.

As is clear from Table 1 below (see, especially, the test result of the polymeric form of 1 wt% and the test result of the monomeric form of 1 wt%), the flow rate was higher in the reverse osmosis composite membrane to which the compound in the monomeric form was bound than in the reverse osmosis composite membranes to each of which the compound in the polymeric form was bound. This indicates that, in the phase of, for example, producing fresh water from sea water, the amount of the fresh water produced from the sea water per unit time increases more, that is, the ability of the reverse osmosis composite membrane is higher in the reverse osmosis composite membrane to which the compound in the monomeric form is bound than in the reverse osmosis composite membrane to which the compound in the polymeric form is bound.

**[Table 1]**

| | Control | 1 wt% (polymeric form) | 3 wt% (polymeric form) | 5 wt% (polymeric form) | 1 wt% (monomeric form) |
|---|---|---|---|---|---|
| Inhibition rate (%) | 99.8 | 99.6 | 99.4 | 99.0 | 99.7 |
| Flow rate (LMH) | 15 | 10 | 8 | 6 | 14 |
| Isoelectric point (pH) | 4.3 | 5.5 | 6 | 6.5 | - |

### (3. Evaluation of antibacterial activity of each of reverse osmosis composite membranes)

As reverse osmosis composite membranes, used were (1') the reverse osmosis composite membranes to each of which the compound in the polymeric form of one of various concentrations (1 wt% or 5 wt%) was bound, (2') the reverse osmosis composite membranes to each of which the compound in the monomeric form of one of various concentrations (3 wt% or 5 wt%) was bound, (3') the reverse osmosis composite membranes to each of which the compound in the monomeric form of one of various concentrations (0.01 wt%, 0.1 wt%, or 1 wt%) was bound, and (4') the reverse osmosis composite membrane to which the compound was not bound (Control).

### (3-1. Reverse osmosis composite membranes to each of which compound in polymeric form was bound)

The antibacterial activity of each of the reverse osmosis composite membranes in the above (1') and (4') was tested in the presence of Zn²⁺ in accordance with a modification of a film adhesion method (JIS Z 2801).

First, each of the reverse osmosis composite membranes was cut so as to have a size of 25 mm × 25 mm under a sterile condition, and immersed in an aqueous zinc nitrate solution of 10 mM.

Each of the reverse osmosis composite membranes was then taken out from the aqueous zinc nitrate solution, and the excess aqueous zinc nitrate solution was wiped off from each of the reverse osmosis composite membranes. By this procedure, obtained were the reverse osmosis composite membranes to each of which the compound in the polymeric form in which compound at least a part of a dipicolylamine structure formed a complex with zinc metal (Zn²⁺) bound.

Next, a culture solution of E. *coli* ATCC 25922 or S. *aureus* ATCC 25923 was added to each of the reverse osmosis composite membranes (inoculated bacteria count: 9.4×10⁴ CFU), and culture was carried out for 24 hours.

After 24 hours of culture, the colony count of E. *coli* ATCC 25922 or S. *aureus* ATCC 25923 grown on each of the reverse osmosis composite membranes was calculated.

Test results are shown below.

**[Table 2]**

| Reverse osmosis composite membrane | *E. coli* (CFU) / Suppression (%) | *S*. *aureus* (CFU) / Suppression (%) |
|---|---|---|
| Control | 3.0×10⁸ / - | 1.1×10⁸ / - |
| 1 wt% (polymeric form) in the presence of Zn²⁺ | 1.7×10⁸ / 57 | 8.9×10⁷ / 80 |
| 5 wt% (polymeric form) in the presence of Zn²⁺ | 2.1×10⁸ / 70 | 3.4×10⁶ / 3 |

In Table 2, "Suppression (%)" indicates a ratio (%) of the colony count (CFU) of *E. coli* or *S. aureus* on each of the reverse osmosis composite membranes to each of which the compound bound, relative to the colony count (CFU) of *E. coli* or *S. aureus* on the Control. Therefore, a lower value of the "Suppression (%)" indicates higher antibacterial activity of the reverse osmosis composite membrane.

Each of the reverse osmosis composite membranes of the present examples exhibited antibacterial activity against both *S. aureus* (Gram-positive bacteria) and *E. coli* (Gram-negative bacteria), and exhibited higher antibacterial activity against *S. aureus* (Gram-positive bacteria) than against *E. coli* (Gram-negative bacteria).

### (3-2. Reverse osmosis composite membranes to each of which compound in monomeric form was bound 1)

The antibacterial activity of each of the reverse osmosis composite membranes in the above (2') and (4') was tested in the presence of Zn²⁺ or in the absence of Zn²⁺ in accordance with the modification of the film adhesion method (JIS Z 2801).

In a case where the test was carried out in the presence of Zn²⁺, each of the reverse osmosis composite membranes was cut so as to have a size of 25 mm × 25 mm under a sterile condition, and immersed in an aqueous zinc nitrate solution of 0.5 mM. Each of the reverse osmosis composite membranes was then taken out from the aqueous zinc nitrate solution, and the excess aqueous zinc nitrate solution was wiped off from each of the reverse osmosis composite membranes. By this procedure, obtained were the reverse osmosis composite membranes to each of which the compound in the monomeric form in which compound at least a part of a dipicolylamine structure formed a complex with zinc metal (Zn²⁺) bound. Two types of bacteria described later were each subjected to a culture test with use of each of the reverse osmosis composite membranes. In a case where the test was carried out in the absence of Zn²⁺, each of the reverse osmosis composite membranes was cut so as to have a size of 25 mm × 25 mm under a sterile condition, and two types of bacteria described later were each subjected to a culture test with use of the each of the reverse osmosis composite membranes.

Next, a culture solution of *E. coli* ATCC 25922 or *S. aureus* ATCC 25923 was added to each of the reverse osmosis composite membranes (inoculated bacteria count: 1.5×10⁵ CFU), and culture was carried out for 24 hours.

After 24 hours of culture, the colony count of *E. coli* ATCC 25922 or *S. aureus* ATCC 25923 grown on each of the reverse osmosis composite membranes was calculated.

Test results are shown below.

**[Table 3]**

| Reverse osmosis composite membrane | *E. coli* (CFU) / Suppression (%) | *S*. *aureus* (CFU) / Suppression (%) |
|---|---|---|
| Control | 3.1×10⁸ / - | 2.8×10⁸ / - |
| 3 wt% (monomeric form) in the absence of Zn²⁺ | 2.4×10⁷ / 7.7 | 5.4×10⁷ / 20 |
| 3 wt% (monomeric form) in the presence of Zn²⁺ | 3.0×10⁷ / 9.7 | 1.7×10⁸ / 61 |
| 5 wt% (monomeric form) in the absence of Zn²⁺ | 3.6×10⁷ / 12 | 1.2×10⁸ / 42 |
| 5 wt% (monomeric form) in the presence of Zn²⁺ | 4.0×10⁷ / 13 | 2.0×10⁸ / 74 |

In Table 3, "Suppression (%)" indicates a ratio (%) of the colony count (CFU) of *E. coli* or *S. aureus* on each of the reverse osmosis composite membranes to each of which the compound bound, relative to the colony count (CFU) of *E. coli* or *S. aureus* on the Control. Therefore, a lower value of the "Suppression (%)" indicates higher antibacterial activity of the reverse osmosis composite membrane.

Each of the reverse osmosis composite membranes of the present examples exhibited antibacterial activity against both *S*. *aureus* (Gram-positive bacteria) and *E*. *coli* (Gram-negative bacteria), and exhibited higher antibacterial activity against *E. coli* (Gram-negative bacteria) than against *S*. *aureus* (Gram-positive bacteria).

Each of the reverse osmosis composite membranes of the present examples exhibited high antibacterial activity, regardless of the presence or absence of Zn²⁺. This indicates that each of the reverse osmosis composite membranes of the present examples does not require metal for expression of the antibacterial activity thereof.

### (3-3. Reverse osmosis composite membranes to each which compound in monomeric form was bound 2)

The antibacterial activity of each of the reverse osmosis composite membranes in the above (3') and (4') was tested in the absence of Zn²⁺ in accordance with the modification of the film adhesion method (JIS Z 2801).

Next, a culture solution of *E. coli* ATCC 25922 was added to each of the reverse osmosis composite membranes each cut so as to have a size of 25 mm × 25 mm under a sterile condition (inoculated bacteria count: 5×10² CFU), and culture was carried out for 24 hours.

After 24 hours of culture, the colony count of *E. coli* ATCC 25922 grown on each of the reverse osmosis composite membranes was calculated.

Test results are shown in Fig. 1.

Fig. 1 is a graph showing results of evaluating the antibacterial activity of each of the reverse osmosis composite membranes in accordance with an embodiment of the present invention (the reverse osmosis composite membranes to each of which the compound in the monomeric form was bound). As shown in Fig. 1, in the Control, the colony count (CFU) of *E*. *coli* ATCC 25922 was approximately 3.8×10⁵ CFU. The bacteria count of approximately 3.8×10⁵ CFU is closer to the bacteria count in actual sea water or water to be treated, than the bacteria count of approximately 3×10⁸ CFU shown in Tables 2 and 3. As shown in Fig. 1, each of the reverse osmosis composite membranes of the present examples exhibited extremely high antibacterial activity against *E*. *coli* (Gram-negative bacteria), regardless of the low concentration of the aqueous solution of the compound and the absence of Zn²⁺.

### Industrial Applicability

The present invention can be widely used in a technique of producing fresh water from sea water, technique of purifying water, and the like.

## Claims

1. A reverse osmosis composite membrane which is obtained by chemically modifying a surface thereof with a compound that has an amino group and that is obtained by modifying the amino group with two molecules of α-picolyl group and has a dipicolylamine structure represented by the following formula (1): 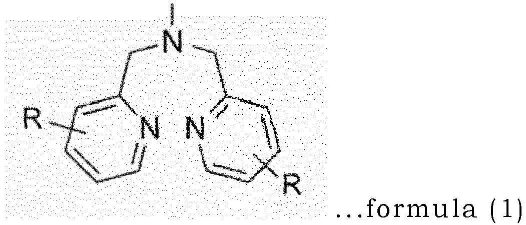 (in the formula (1), each R is independently selected from the group consisting of a hydrogen atom, halogen atoms, a nitro group, a cyano group, an amino group, alkyl groups having 1 to 6 carbon atoms, and alkoxy groups having 1 to 6 carbon atoms and may be identical or different, and the dipicolylamine structure may form a complex with a metal M).

2. The reverse osmosis composite membrane as set forth in claim 1, wherein the compound is represented by the following formula (2):

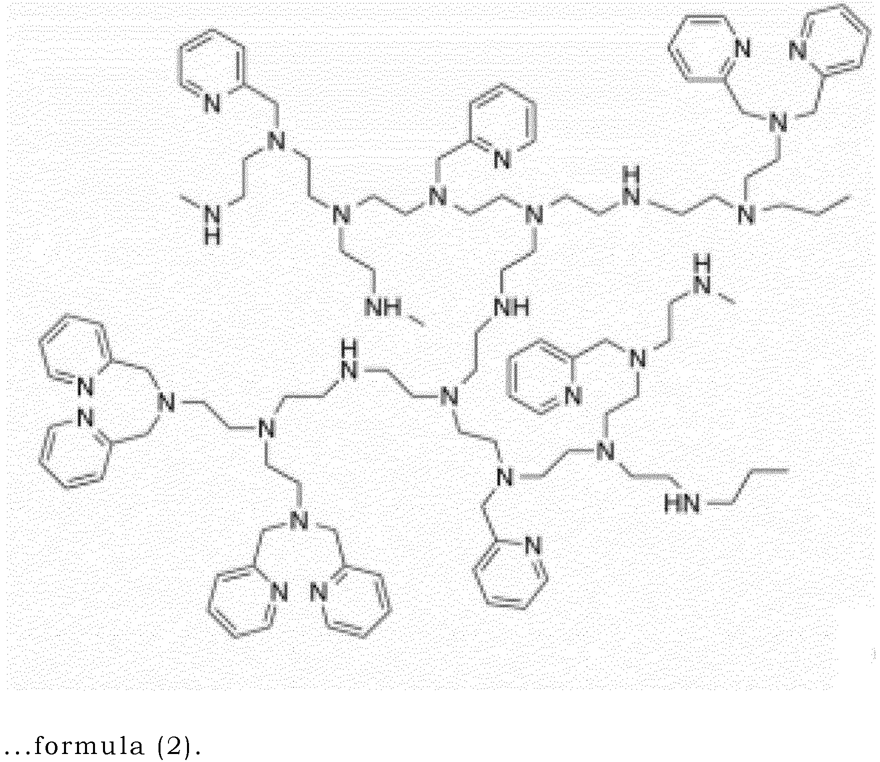

3. The reverse osmosis composite membrane as set forth in claim 1, wherein the compound is represented by the following formula (3): 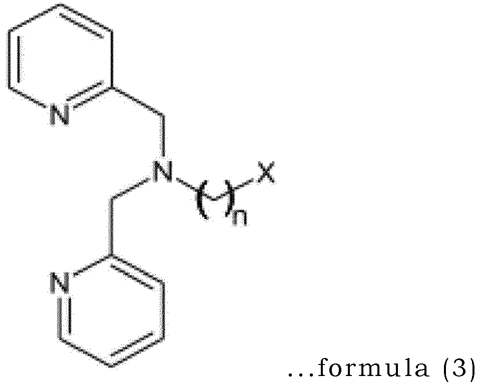 (in the formula (3), n is an integer of 1 or more, and X is a functional group which binds to a carboxyl group).

4. The reverse osmosis composite membrane as set forth in any one of claims 1 through 3, wherein the dipicolylamine structure forms the complex with the metal M.

5. The reverse osmosis composite membrane as set forth in any one of claims 1 through 3, wherein the dipicolylamine structure does not form the complex with the metal M.

## Amended claims

### Amended claims under Art. 19.1 PCT

1. (Amended) A reverse osmosis composite membrane which is obtained by chemically modifying a surface thereof with a compound that has an amino group and that is obtained by modifying the amino group with two molecules of α-picolyl group and has a dipicolylamine structure represented by the following formula (1),
the compound that has the amino group being the compound in a monomeric form, 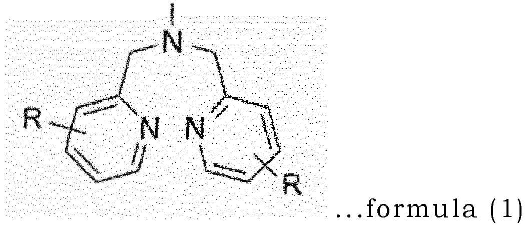 (in the formula (1), each R is independently selected from the group consisting of a hydrogen atom, halogen atoms, a nitro group, a cyano group, an amino group, alkyl groups having 1 to 6 carbon atoms, and alkoxy groups having 1 to 6 carbon atoms and may be identical or different, and the dipicolylamine structure may form a complex with a metal M).

2. (Cancelled)

3. The reverse osmosis composite membrane as set forth in claim 1, wherein the compound is represented by the following formula (3): 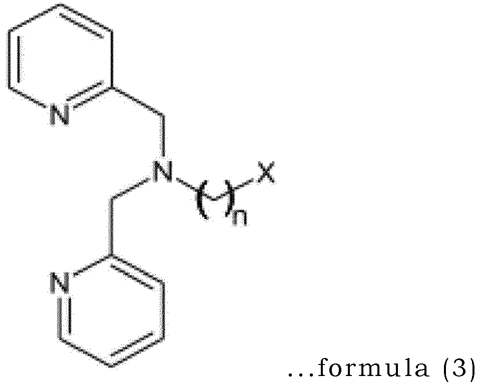 (in the formula (3), n is an integer of 1 or more, and X is a functional group which binds to a carboxyl group).

4. (Amended) The reverse osmosis composite membrane as set forth in claim 1 or 3, wherein the dipicolylamine structure forms the complex with the metal M.

5. (Amended) The reverse osmosis composite membrane as set forth in claim 1 or 3, wherein the dipicolylamine structure does not form the complex with the metal M.
